# EUROPEAN PATENT SPECIFICATION

(11) **EP 0 928 932 B1**
(45) Date of publication and mention of the grant of the patent: **02.05.2002**
(21) Application number: 99200070.3
(22) Date of filing: 11.01.1999
(51) Int. Cl.: F24F 12/00

(54) **Room heating system**
Raumheizungsanlage
Installation de chauffage de locaux

(30) Priority: 09.01.1998 NL 1007999; 27.07.1998 NL 1009747
(43) Date of publication of application: 14.07.1999
(73) Proprietor: J.E. Stork Ventilatoren B.V., 8401 AM Zwolle (NL)
(72) Inventor: De Graaff, Abraham Anthony John, 8016 MA Zwolle (NL)
(74) Representative: Land, Addick Adrianus Gosling

(56) References cited:
- EP-A- 0 029 573
- EP-A- 0 414 231
- WO-A-89/05947
- DE-A- 19 508 252
- US-A- 4 512 393

## Description

The invention relates to a heat exchanger system, according to the preamble of claim 1.

Such a heat exchanger is disclosed in EU 0 029 573 A2.

Further is known from EP-A-0 414 231 A2 a cross-flow-heat exchanger wherein icing-up is prevented by switching on and off of the first fan, which reduces the efficiency of the system.

The object of the present invention is to improve upon the above mentionned prior art systems.

This object is achieved by the heat exchanger system according to claim 1.

The fans can be arranged at a desired position in the associated through-flow circuit and be disposed in particular upstream or downstream of the heat exchanger. The fans thus lie respectively in pressure and suction relation to the heat exchanger.

The system according to the invention is preferably embodied such that over the greater part of the heat exchanger said directions differ mutually by less than 45°, preferably by less than 30°.

This latter system is preferably embodied such that over the greater part of the heat exchanger said directions differ mutually by less than 10°, preferably by less than 5°.

A preferred embodiment is characterized by a bypass which is to be opened and closed by a controllable valve and which is connected over the second through-flow circuit part of the heat exchanger. In this embodiment the air for discharge coming from the space can be guided selectively through the heat exchanger or round the heat exchanger directly to the outlet.

In a determined control scenario the bypass valve is opened when accelerated cooling must take place with outside air. It is important that the temperature of the supplied air does not fall below a predetermined temperature. This temperature must have a comfortable value and is therefore designated with T_{comfort}. The bypass valve is opened when a temperature T1 is reached which satisfies T1 greater than T_{comfort} and T1 + T_{bypass difference} smaller than T3, wherein T3 is likewise a chosen value.

Said temperature T_{bypass difference} has a value of 0-7°C and can be a factory setting. T_{comfort} is a value to be set by the user of the system. In the case the bypass is applied, T_{comfort} can be adjusted to between for instance 15 and 25°C by the user of the system, for instance the occupant of a house.

Another control scenario could be structured as follows.

The bypass is opened when accelerated cooling must take place with outside air. This is the case if the terrestrial heat exchanger (THE) is switched on when T_{outside} > T_{THE-high}, or if the THE is switched on additionally by hand. In addition, it is important that the temperature of the supplied air does not fall below T_{comfort}. The bypass opens when: T₁ > T_{comfort}, while T₁ < T₃ also applies. T₁ is herein the outside temperature (supply air from outside) and T₃ the inside temperature (discharge air from inside), both measured in the appliance. T_{comfort} is a value to be set by the user of between 15 and 25°C.

In addition, use is made in the control of T_{Bypass} _{Hysteresis}, and in both switching conditions this temperature difference is used to apply hysteresis in the circuit. This prevents the bypass valve opening and closing repeatedly in the transition range of the switching condition. Additional switching-on of the THE has priority over T_{comfort}.

T_{Bypass Hysteresis} is a factory setting.

T_{comfort} is set by the user.

In addition to the bypass valve, the output of the discharge fan is simultaneously increased or decreased. The air flows hereby remain in balance despite the varying resistance. The parameter "correction bypass" is used herefor.

The system preferably has the special feature that the valve is controllable by the control means. An automatic control can hereby take place in simple manner.

A specific, very advantageous embodiment has the special feature that the control means are adapted to control the bypass valve, the first fan and the second fan in mutual relation under program control. Thus can be achieved that the two air flows remain balanced despite a variation in resistance which may occur during opening and closing of the bypass valve.

A specific embodiment has the special feature that said control takes place also under the influence of a temperature of the outside air measured by a temperature sensor and a chosen value of the difference in temperature between the inside and outside air.

In the system according to the invention the heat exchanger is of the very high efficiency type. It is not therefore of the usual cross-flow type but of a counterflow type or at least a type mainly possessing the properties of a counterflow heat exchanger. The heat exchanger will have a thermal efficiency of about 90% at for instance 150 m³/h. Through use of this high efficiency heat exchanger a large part of the thermal energy in the air which is extracted from the heated space is transferred to the air which is blown into the space again. The advantages of such a structure are that very little thermal loss still occurs during ventilation and that a relatively high blow-in temperature is reached, whereby fewer problems of comfort occur. The drawback however is that in winter the temperature of the air which leaves the exchanger to the outside can fall below 0°C. This entails the danger of the exchanger freezing. In these conditions a layer of ice of increasing thickness is deposited on the relevant walls. This is disastrous for the operation of the system because this will completely block the passage through the exchanger. This will result in less or no ventilation of the space in question and therefore be accompanied by a lower or wholly lacking heat transfer. This situation must therefore always be avoided.

There are in principle three effects which influence freezing of the heat exchanger. These are:
(1) the thermal efficiency of the heat exchanger;
(2) the inside and outside temperatures;
(3) the relative humidity of the inside air.

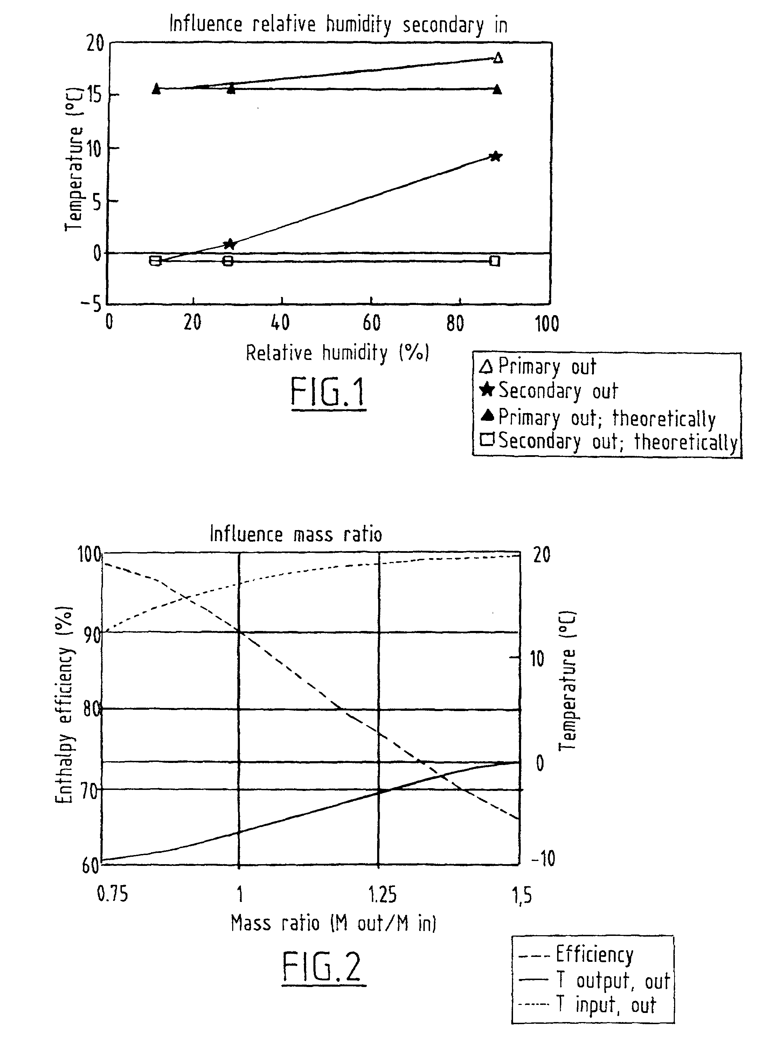

The first point is self-evident. At a high efficiency the blow-out temperature of the air blown to the outside will be lower. The effect of point (2) is also readily understood. The lower the outside temperature, the lower the blow-out temperature and the greater the chance of icing. The influence of point (3), the relative humidity of the inside air, is less readily understandable. It has been found from measurements that due to the condensation of moisture in the cooling discharge air the blow-out temperature reaches a higher value than anticipated. It can be seen from figure 1 how the blow-out temperature (secondary out) and the blow-in temperature (primary out) depend on the relative humidity of the inside air. It is now found that so much energy is released through condensation of the moisture that icing-up of the heat exchanger can be prevented over a much greater range. The average relative humidity in a space, for instance a residential dwelling, will not easily rise above 40% in the winter. If there is less moisture to freeze, the exchanger will also become blocked less quickly. If the standard reference year for the Netherlands is examined in order to see what the chance of icing-up is, it can then be concluded that the temperature is below zero for about 14% of the year. If however the effect of condensation is added, the danger of icing-up can then occur for only 5-6% of the year. This will moreover be spread over a number of short periods.

Icing-up of the heat exchanger can be prevented in diverse ways:
(1) shut down the supply of cold air completely if the blow-out temperature becomes too low;
(2) pre-heat the air supplied from outside, so that it enters the exchanger at a temperature of about or just above 0°C;
(3) consciously create imbalance in the air flows whereby the efficiency of the heat exchanger can be increased or decreased.

If the prior art solution (1) is followed, the supply switches off when the temperature of the supply air falls below a determined value, i.e. about 6°C, downstream of the heat exchanger. This means that during the coldest periods of the year, precisely when the most energy can be recovered, the supply is halted and balanced ventilation with heat recovery is therefore no longer possible. This is a great waste of thermal energy which will have to be readjusted by firing the central heating again. It is also perceived as disagreeable to have no supply of fresh air in a closed space. Particularly in residential dwellings this is very undesirable in bedrooms and living rooms.

The second solution ensures that the temperature of the air entering the heat exchanger is always high enough so that the exiting air never falls below zero. A continuously adjustable electrical element is herein placed to enable full heating as required. For an average home in the Netherlands this solution will consume 50-100 kWh of electrical energy. This solution, likewise known from the prior art, has the following problems:
the used energy is designated as "secondary" because it is generated via combustion of for instance gas. The efficiency of conversion of this energy to the desired form, electricity, is no more than 35-40%.

In addition, incorporation of a heating element costs about NLG 80.- in material and man-hours at current rates. From the viewpoint of comfort, this is an elegant solution but has the drawback of costing much energy and money.

The third solution, in accordance with the invention, consists of the system according to the invention having the special feature that the control means are adapted to adjust both fans in the case of imminent icing-up of the heat exchanger such that the first fan produces a lower flow rate than the second fan.

This variant can be particularly characterized by a temperature sensor which is placed in the discharge air in the second air flow downstream of the heat exchanger and which measures the discharge air temperature and feeds an associated temperature signal to the control means in order to adjust the volume flow difference between the two fans, by such a minimal amount that icing-up of the heat exchanger is prevented.

These latter variants obviate the problem of icing-up of the heat exchanger by guiding less cold air through the heat exchanger. The exiting air will hereby cool less and the danger of icing-up is thus reduced. As described, the temperature of the discharge air can be measured, whereby the least possible use of this frost protection need be made. The control will generally always operate such that it satisfies the conditions ensuring the highest efficiency.

Fig. 2 shows the influence of the mass or flow rate ratio.

If an imbalance between the two air flows is generated in the space, some cold air will in all conditions flow to the inside through cracks and holes. This will however be generally heated with primary energy (thus via the heating which is present), whereby minimal loss of energy occurs, in contrast to electrical preheating of the supply air. The volume flow can be continuously adjusted with the present DC motors, whereby the proposed solution is easy to realize. The advantage is the balance in the ventilation which is for the most part maintained in the period when this is most important and which, in terms of energy, provides the most advantages.

In order to prevent fouling of the heat exchanger the variant is recommended in which a dust filter is placed in at least one through-flow circuit upstream of the heat exchanger.

A simple and practical embodiment which is inexpensive to construct is characterized by a housing and positioning means which position the heat exchanger relative to this housing and which are embodied in foam plastic, for instance polypropylene (PP).

The system according to the invention is preferably embodied such that the second air flow flows in downward direction through the heat exchanger.

Figures 1 and 2 have already been discussed in the foregoing. Figure 3 shows a system according to the invention in partly broken away perspective view.

The system 1 comprises a housing 2 in which the diverse components are accommodated. A heat exchanger 3 is placed centrally. This is positioned fixedly in housing 2 by means of polypropylene foam plastic inserts 4,5.

A pipe stub 6 receives a flow 7 of outside air which runs through heat exchanger 3 via a filter 8. This flow 7 leaves system 1 via a pipe stub 9 after having been in heat-exchanging contact in heat exchanger 3 with a second air flow to be described hereinafter.

A pipe stub 10 and/or a pipe stub 11 receive a flow 12, 12' of return air. On this entry side the flows 7 and 12, 12' are separated by a dividing wall 13. Air flow 12 runs through heat exchanger 3 in the manner indicated, wherein in the schematically indicated manner it is practically in counterflow to air flow 7, whereby a very high heat-exchanging efficiency is realized.

Air flow 12 and/or 12' likewise runs through a filter which is designated with reference numeral 14.

Situated in addition at the top of heat exchanger 3 is a bypass 15 in which is accommodated a bypass valve 16 controllable by control means (not shown). Only in the case bypass valve 16 is closed can air flow 12 finds its way through heat exchanger 3, while in the case bypass valve 16 is open, therefore in the drawn position, the air flow 12" as it were short-circuits the flow through the heat exchanger, whereby there is no longer any substantial heat-exchanging contact between flows 7 and 12. It is noted that the bypass valve can also be controlled, for instance by means of the drive 17 embodied in that case as stepping motor, such that it can occupy desired intermediate positions between the closed and open positions.

Air flow 7 is maintained by a fan 18, while air flow 12 is maintained by a fan 19. These fans are coupled for control to central control means, as is drive 17 of bypass valve 16. The operation of the system according to the invention has already been explained in the foregoing.

Not shown is that the heat exchanger can be provided on its underside with a condensation outlet with siphon. The central control unit (not shown) is arranged in a housing 20 placed in an upper compartment 21 in a housing 2.

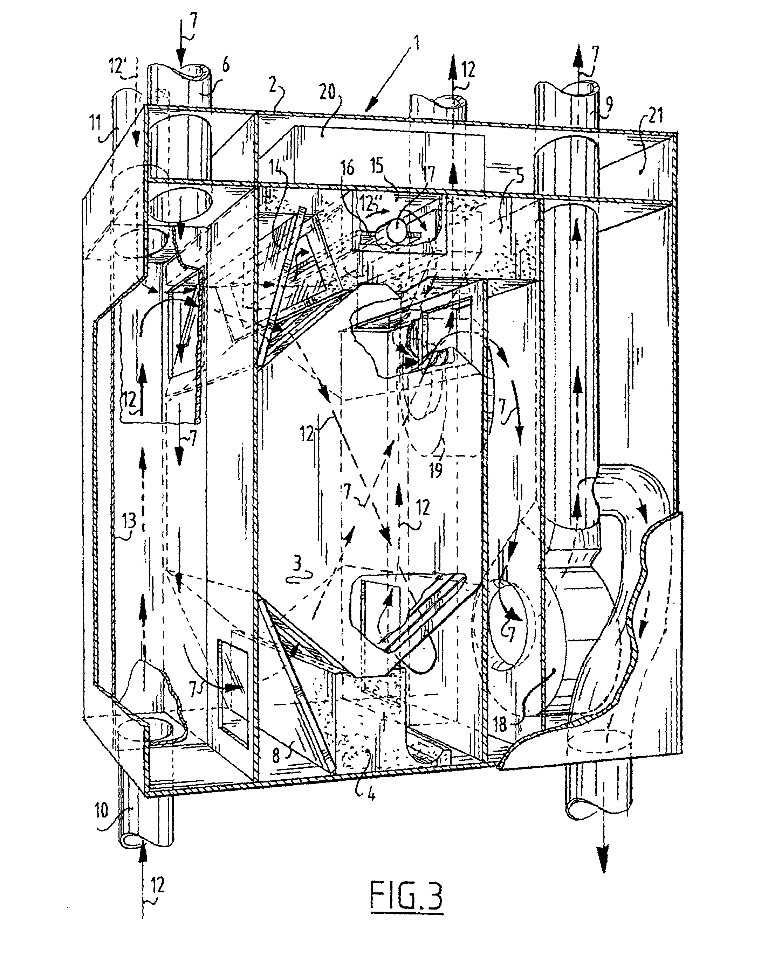

As shown in fig. 3, the structure of system 1 is mirror-symmetrical and therefore reversible, which improves the applicability under diverse conditions.

In respect of the choice of polypropylene foam for positioning of the heat exchanger and optional other components, it is noted that this material possesses sufficient mechanical strength and a temperature-resistance to about 100°C. In contrast to polystyrene it is not very or not at all brittle and has a certain flexibility. It also enables the use of snap connections. On the basis of this type of inserts the option also exists of making couplings between the inserts and of embodying the connections or joins between these inserts in airtight manner by means of snap connections.

The central control unit can be embodied with EPROMs, and thus be programmable. This makes it easy to adapt the system to the wishes of an installer or a user, while malfunctions can also be traced easily.

Housing 2 with the internal partitions and walls is preferably of metal, for instance steel.

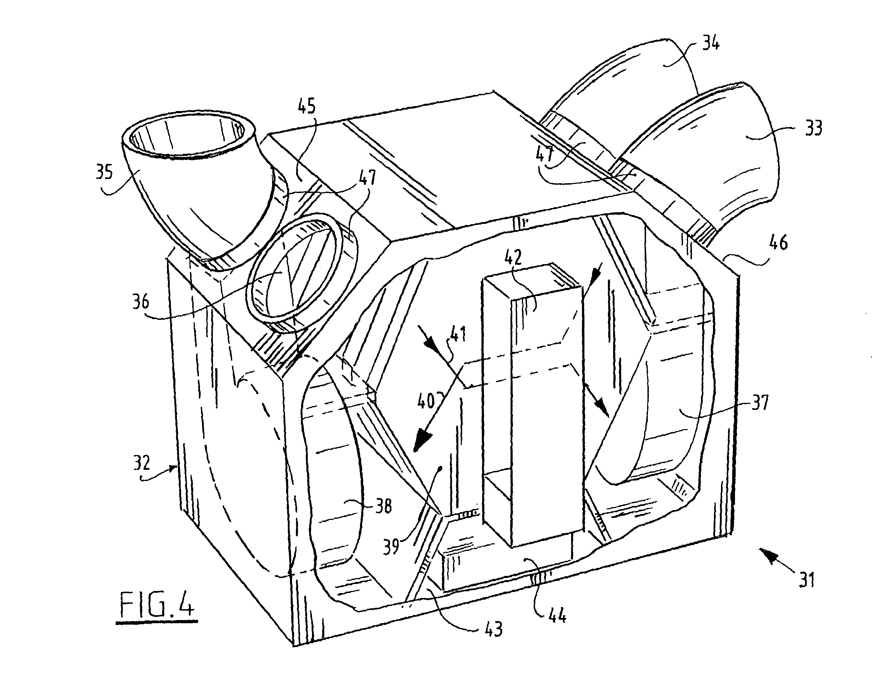

Fig. 4 shows a preferred embodiment of the heat exchanger system according to the invention. System 31 has a casing or housing 32 onto which connect two pairs of pipe stubs corresponding with the inlets and outlets of the two through-flow circuits. Three of the pipe stubs are drawn. These are designated respectively 33, 34 and 35. Pipe stub 33 corresponds with the discharge from the system 31 of outside air coming from outside air inlet 36, while the return air coming from the space for ventilating is guided via pipe stub 34 to discharge air pipe stub 35 for discharge to the outside. As shown, a respective fan 37, 38 connects onto pipe stubs 33, 35.

Heat exchanger 39 is disposed such that in the central part the respective first and second air flows 40, 41 extend substantially horizontally in counterflow.

Drawn very schematically is a bypass for selective opening and closing. Situated under heat exchanger 39 is a cavity 43 in which is accommodated an electronic control unit 44.

The housing has two wall parts 45, 46 sloping at 45° to which said pipe stubs connect by means of connecting rings which are all designated for the sake of convenience with 47. The pipe stubs are rotatable round their local axis in sealing relation relative to rings 47. The pipe stubs are further formed such that their axes at their ends form an angle of 45° to each other. By choosing an appropriate angular position of a respective pipe stub the free end thereof can thus extend as desired for instance horizontally, such as shown for pipe stubs 33, 34, or vertically, such as shown for pipe stub 35.

The described and shown heat exchangers operate substantially in counterflow. Only in the infeed respectively outfeed zones are there flow directions related to cross-flow.

The described bypass can also guide the supplied air flow instead of the discharge air flow round the heat exchanger.

## Claims

1. Heat exchanger system, which system comprises a heat exchanger (3) comprising two through-flow circuits physically separated from each other and thermally coupled to each other by means of a number of heat-conducting walls, i.e. a first and a second through-flow circuit, which circuits are arranged in mutually interwoven relation,
through which first through-flow circuit a first air flow (7) flows during operation from an outside air inlet (6) to a first outlet (9) into a space for ventilating, and
through which second through-flow circuit a second air flow (12) flows during operation from a discharge air inlet connecting to said space to a second outlet to the outside, wherein
a controllable first fan (18) is arranged in the first through-flow circuit, for instance between the heat exchanger (3) and the first outlet;
a controllable second fan (19) is arranged in the second through-flow circuit, for instance between the heat exchanger and the second outlet;
control means (44) are present for individual control of each of the two fans; and
the heat exchanger (3) is embodied such that the two air flows flow through the respective through-flow circuits of the heat exchanger in directions which are predominantly mutually opposed,
**characterized in that**
the control means are adapted to continuously adjust the volume flow of the first fan (10) and to continuously adjust the volume flow of the second fan (9) so as to create imbalance in the air flows in the case of imminent icing-up of the heat exchanger, wherein the volume flow difference between the two fans is adjusted by a minimum amount so that icing up is prevented.

2. System as claimed in claim 1,
**characterized in that**
a temperature sensor which is placed in the discharge air in the second air flow (12) downstream of the heat exchanger (3) and which measures the discharge air temperature and feeds an associated temperature signal to the control means (44) in order to adjust the volume flow difference between the two fans by the minimum amount so that, icing-up of is prevented.

3. System as claimed in claim 1,
**characterized in that**
over the greater part of the heat exchanger said directions differ mutually by less than 45°, preferably by less than 30°.

4. System as claimed in claim 1,
**characterized in that**
over the greater part of the heat exchanger said directions differ mutually by less than 10°, preferably by less than 5°.

5. System as claimed in claim 1,
**characterized by**
a bypass (15) which is to be opened and closed by a controllable valve (16) and which is connected over the second through-flow circuit part of the heat exchanger (3).

6. System as claimed in claim 1,
**characterized in that**
the valve (16) is controllable by the control means.

7. System as claimed in claim 1,
**characterized in that**
the control means are adapted to control the bypass valve, (16) the first fan (18) and the second fan (19) in mutual relation under program control.

8. System as claimed in claim 7,
**characterized in that** said control takes place under the influence of the temperature of the outside air measured by a temperature sensor and a chosen value of the difference in temperature between the inside and outside air.

9. System as claimed in claim 1,
**characterized in that**
a dust filter is placed in at least one through-flow circuit upstream of the heat exchanger.

10. System as claimed in claim 1,
**characterized by**
a housing (32) and positioning means which position the heat exchanger relative to this housing (33) and which are embodied in foam plastic, for instance polypropylene (PP).

11. System as claimed in claim 1,
**characterized in that**
the second air flow (12) flows in downward direction through the heat exchanger.

12. System as claimed in claim 1,
**characterized in that**
both air flows (7;12) move at least more or less horizontally in the heat exchanger.

13. System as claimed in claim 1,
**characterized by**
a housing (32) onto which connect two pairs of pipe stubs (33,34,35) corresponding with the inlets and outlets of the two respective through-flow circuits, which pipe stubs each connect onto a wall part (45,46) of the housing disposed at an inclination of 45°, are rotatable round their first local axis in sealing relation relative to these wall parts and have a free end zone, wherein the second local axis of the pipe stubs forms an angle of 45° to the relevant first local axis.

## Patentansprüche

1. Wärmeaustauschersystem mit einem Wärmeaustauscher (3), der zwei Durchströmkreise aufweist, die physikalisch voneinander getrennt und thermisch miteinander über mehrere Wärmeleitwände gekoppelt sind, d.h. mit einem ersten und einem zweiten Durchströmkreis, die gegenseitig verflochten sind, wobei
durch den ersten Durchströmkreis eine erste Luftströmung (7) während des Betriebes von einem Außenlufteinlaß (6) nach einem ersten Auslaß (9) in einen Raum zur Belüftung strömt, und
durch den zweiten Durchströmkreis eine zweite Luftströmung (12) während des Betriebes von einem Abgabelufteinlaß, der den Raum mit einem zweiten Auslaß verbindet, nach außen strömt;
ein einstellbares erstes Gebläse (18) in dem ersten Durchströmkreis beispielsweise zwischen dem Wärmeaustauscher (3) und dem ersten Auslaß vorgesehen ist;
ein einstellbares zweites Gebläse (19) in dem zweiten Durchströmkreis angeordnet ist, beispielsweise zwischen dem Wärmeaustauscher und dem zweiten Auslaß;
eine Steuereinrichtung (44) zur individuellen Einstellung eines jeden der beiden Gebläse vorgesehen ist, und
der Wärmeaustauscher (3) derart angeordnet ist, daß die beiden Luftströme durch die jeweiligen Durchströmkreise des Wärmeaustauschers in Richtungen strömen, die vorherrschend entgegengesetzt zueinander sind,
**dadurch gekennzeichnet, daß**
die Steuereinrichtung kontinuierlich den Volumenstrom von dem ersten Gebläse (18) und kontinuierlich den Volumenstrom des zweiten Gebläses (19) so einstellt, daß ein Ungleichgewicht in den Luftströmungen im Falle einer drohenden Vereisung des Wärmeaustauschers erzeugt wird, wobei die Volumenflußdifferenz zwischen den beiden Gebläsen auf einen minimalen Betrag so eingestellt wird, daß eine Vereisung verhindert wird.

2. System nach Anspruch 1,
**dadurch gekennzeichnet, daß**
ein Temperatursensor in der Ausströmluft in der zweiten Luftströmung(12) stromab des Wärmeaustauschers (3) vorgesehen ist, der die Abgabelufttemperatur mißt und ein entsprechendes Temperatursignal der Steuereinrichtung (44) liefert, um die Volumenstromdifferenz zwischen den beiden Gebläsen durch den minimalen Betrag so einzustellen, daß eine Vereisung verhindert wird.

3. System nach Anspruch 1,
**dadurch gekennzeichnet, daß**
über den größeren Teil des Wärmeaustauschers die Richtungen der gegeneinanderführenden Ströme sich um weniger als 45°, vorzugsweise weniger als 30°, unterscheiden.

4. System nach Anspruch 1,
**dadurch gekennzeichnet, daß**
sich über den größeren Teil des Wärmeaustauschers die Richtungen der gegenseitigen Ströme um weniger als 10 %, vorzugsweise weniger als 5 %, unterscheiden.

5. System nach Anspruch 1,
**gekennzeichnet durch**
eine Nebenstromleitung (15), die **durch** ein steuerbares Ventil (16) geöffnet und geschlossen wird und die über den zweiten Durchströmkreisteil des Wärmeaustauschers (3) verbunden ist.

6. System nach Anspruch 1,
**dadurch gekennzeichnet, daß**
das Ventil (16) durch die Steuereinrichtung einstellbar ist.

7. System nach Anspruch 1,
**dadurch gekennzeichnet, daß**
die Steuereinrichtung das Nebenstromventil (16), das erste Gebläse (18) und das zweite Gebläse (19) in gegenseitiger Beziehung unter Programmsteuerung einstellt.

8. System nach Anspruch 7,
**dadurch gekennzeichnet, daß**
die Steuerung unter dem Einfluß der von einem Temperatursensor gemessenen Außenluft und einem gewählten Wert der Differenz der Temperatur zwischen Innenluft und Außenluft stattfindet.

9. System nach Anspruch 1,
**dadurch gekennzeichnet, daß**
ein Staubfilter in wenigstens einem Durchströmkreis stromauf des Wärmeaustauschers vorgesehen ist.

10. System nach Anspruch 1,
**gekennzeichnet durch**
ein Gehäuse (32) und Positionierungsmittel, die den Wärmeaustauscher relativ zu diesem Gehäuse (32) positionieren und die in einem Plastikschaum, beispielsweise einem Polypropylenschaum (PP) eingebettet sind.

11. System nach Anspruch 1,
**dadurch gekennzeichnet, daß**
die zweite Luftströmung (12) in Richtung stromabwärts durch den Wärmeaustauscher fließt.

12. System nach Anspruch 1,
**dadurch gekennzeichnet, daß**
beide Luftströme (7, 12) sich wenigstens mehr oder weniger horizontal innerhalb des Wärmeaustauschers bewegen.

13. System nach Anspruch 1,
**gekennzeichnet durch**
ein Gehäuse (32), an welchem zwei Paare von Rohrstummeln (33, 34, 35) entsprechend mit den Eingängen und Auslässen der jeweiligen Durchströmkreise verbunden sind, wobei die Rohrstummel jeweils an einem Wandteil (45, 46) des Gehäuses verbunden sind, geneigt unter einem Winkel von 45°, und zwar drehbar um ihre erste örtliche Achse in Dichtungsbeziehung relativ zu diesen Wandteilen, wobei diese eine freie Endzone besitzen und wobei die zweite örtliche Achse der Rohrstummel einen Winkel von 45° gegenüber der relevanten ersten örtlichen Achse aufweist.

## Revendications

1. Système d'échangeur de chaleur, lequel système comprend un échangeur de chaleur (3) comportant deux circuits de flux physiquement traversants séparés l'un de l'autre et couplés thermiquement entre eux au moyen d'un certain nombre de parois conductrices de chaleur, à savoir un premier et un second circuits de flux traversant, lesquels circuits sont agencés en une relation mutuellement entrelacée,
à travers lequel premier circuit de flux traversant un premier flux d'air (7) circule pendant le fonctionnement depuis un orifice d'entrée (6) d'air extérieur jusqu'à un premier orifice de sortie (9) dans un espace destiné à la ventilation, et
à travers lequel second circuit de flux traversant un second flux d'air (12) circule pendant le fonctionnement depuis un orifice d'air d'évacuation se raccordant audit espace jusqu'à un second orifice de sortie vers l'extérieur, dans lequel :
un premier ventilateur commandable (18) est disposé dans le premier circuit de flux traversant, par exemple entre l'échangeur de chaleur (3) et le premier orifice de sortie ;
un second ventilateur commandable (19) est disposé dans le second circuit à flux traversant, par exemple entre l'échangeur de chaleur et le second orifice de sortie ;
des moyens de commande (14) sont présents pour la commande individuelle de chacun des deux ventilateurs et ;
l'échangeur de chaleur (3) est réalisé de telle sorte que les deux flux d'air circulent à travers les circuits à flux traversant respectifs de l'échangeur de chaleur dans les directions qui sont, de manière prédominante, mutuellement opposées,
**caractérisé en ce que**
les moyens de commande sont conçus pour ajuster en continu le débit volumique du premier ventilateur (18) et pour ajuster en continu le débit volumique du second ventilateur (19) de manière à créer un déséquilibre dans les flux d'air dans le cas d'un givrage imminent de l'échangeur de chaleur, dans lequel la différence de débit volumique entre les deux ventilateurs est ajustée d'une quantité minimale de sorte que le givrage est empêché.

2. Système selon la revendication 1,
**caractérisé en ce que**
un capteur de température qui est placé dans l'air d'évacuation dans le second flux d'air (12) en aval de l'échangeur de chaleur (3) et qui mesure la température de l'air d'évacuation envoie un signal de température associé au moyen de commande (44) afin d'ajuster la différence de débit volumique entre les deux ventilateurs d'une quantité minimale telle que le givrage est empêché.

3. Système selon la revendication 1,
**caractérisé en ce que**
sur la plus grande partie de l'échangeur de chaleur, lesdites directions diffèrent mutuellement de moins d'environ 45°, de préférence de moins de 30°.

4. Système selon la revendication 1,
**caractérisé en ce que**
sur la plus grande partie de l'échangeur de chaleur, lesdites directions diffèrent mutuellement de moins de 10°, de préférence de moins de 5°

5. Système selon la revendication 1,
**caractérisé en ce que**
une dérivation (15) qui doit ouverte et fermée par une soupape commandable (16) et qui est raccordée à la seconde partie de circuit de flux traversant de l'échangeur de chaleur (3).

6. Système selon la revendication 1
**caractérisé en ce que**
la soupape (16) est commandable par le moyen de commande.

7. Système selon la revendication 1,
**caractérisé en ce que**
les moyens de commande sont adaptés pour commander la soupape de dérivation (16), le premier ventilateur (18) et le second ventilateur (19) en relation mutuelle sous commande de programme.

8. Système selon la revendication 7,
**caractérisé en ce que** ladite commande a lieu sous l'influence de la température de l'air extérieur mesurée par un capteur de température et une valeur choisie de la différence de température entre l'air intérieur et l'air extérieur.

9. Système selon la revendication 1,
**caractérisé en ce que**
un filtre à poussière est placé dans au moins un circuit à flux traversant en amont de l'échangeur de chaleur.

10. Système selon la revendication 1
**caractérisé par**
un logement (32) et un moyen de positionnement qui positionnent l'échangeur de chaleur par rapport à ce logement (32) et qui sont réalisés en matière plastique alvéolaire, par exemple le polypropylène (PP).

11. Système selon la revendication 1,
**caractérisé en ce que**
le second flux d'air (12) circule dans une direction vers le bas à travers l'échangeur de chaleur.

12. Système selon la revendication 1,
**caractérisé en ce que**
les deux flux d'air (7, 12) se déplacent au moins plus ou moins horizontalement dans l'échangeur de chaleur.

13. Système selon la revendication 1,
**caractérisé par**
un logement (32) auquel se raccordent deux paires tronçons de tuyau (33, 34, 35) correspondant aux orifices d'entrée et aux orifices de sortie des deux circuits respectifs de flux traversant, lesquels tronçons de tuyau se raccordent chacun à une partie de paroi (45, 46) du logement disposé avec une inclinaison de 45°, peuvent être mis en rotation autour de leur premier axe local en relation d'étanchéité avec ces partie de paroi et comportent une zone d'extrémité libre, dans lequel le second axe local des tronçons de tuyau forme un angle de 45° par rapport au premier axe local correspondant.
